Europäisches Patentamt

European Patent Office

Office européen des brevets

(19)

(11) **EP 1 021 820 B1**

(12) **FASCICULE DE BREVET EUROPEEN**

(45) Date de publication et mention
de la délivrance du brevet:
**27.02.2002 Bulletin 2002/09**

(21) Numéro de dépôt: **98943618.3**

(22) Date de dépôt: **28.09.1998**

(51) Int Cl.⁷: **H01J 61/44**

(86) Numéro de dépôt international:
**PCT/CH98/00412**

(87) Numéro de publication internationale:
**WO 99/17340 (08.04.1999 Gazette 1999/14)**

(54) **LAMPE ELECTRIQUE A DECHARGE**

ELEKTRISCHE ENTLADUNGSLAMPE

DISCHARGE ELECTRIC LAMP

(84) Etats contractants désignés:
**AT BE CH CY DE DK ES FI FR GB GR IE IT LI LU
MC NL PT SE**
Etats d'extension désignés:
**AL LT LV MK RO SI**

(30) Priorité: **29.09.1997 CH 227797**

(43) Date de publication de la demande:
**26.07.2000 Bulletin 2000/30**

(73) Titulaire: **UNIVERSITE DE GENEVE
1211 Genève 4 (CH)**

(72) Inventeurs:
• **BILL, Hans
CH-1228 Plan-les-Ouates (CH)**
• **HAGEMANN, Hans
CH-1258 Perly (CH)**
• **KUBEL, Frank
CH-1208 Genève (CH)**

(74) Mandataire: **Kovacs, Paul
Katzarov S.A., 19, Rue des Epinettes
1227 Genève (CH)**

(56) Documents cités:
EP-A- 0 591 746          FR-A- 2 355 899
US-A- 3 693 006          US-A- 4 336 154

• DATABASE WPI Section Ch, Week 9110 Derwent
Publications Ltd., London, GB; Class L03, AN
91-069125 XP002085871 & JP 03 017183 A
(TOSHIBA KK) , 25 janvier 1991

## Description

La présente invention concerne une lampe électrique à décharge comprenant une enveloppe dont au moins une partie est constituée d'une paroi transparente ayant une surface intérieure au moins partiellement recouverte par un revêtement de matière luminescente capable d'émettre de la lumière visible sous l'effet d'une irradiation par un rayonnement d'excitation ultraviolet, la lampe comprenant en outre, des moyens pour produire un tel rayonnement.

Une telle lampe électrique, couramment désignée également par le terme de "lampe fluorescente" ou "tube fluorescent" est le plus souvent réalisée sous forme tubulaire, son enveloppe étant généralement constituée d'un tube de verre scellé, et le rayonnement d'excitation provenant d'une décharge électrique entretenue dans une atmosphère de gaz inerte, sous une pression inférieure à la pression atmosphérique, par exemple de l'argon, sous une pression de 0,01 à 40 mm Hg, contenue à l'intérieur de l'enveloppe.

Conformément à l'état actuel de la technique, les matières luminescentes habituellement utilisées dans les lampes du genre susmentionné nécessitent pour leur excitation un rayonnement ultraviolet dit "dur", c'est-à-dire ayant une longueur d'onde inférieure à une valeur de l'ordre de 300 nm, tel qu'un rayonnement de 254 nm produit par l'excitation d'une petite quantité de mercure contenue dans ladite atmosphère de gaz inerte.

Un tel rayonnement ultraviolet est fortement actinique et l'irradiation par ce rayonnement est susceptible de provoquer des effets physiologiques dangereux sur les êtres vivants. Bien que l'on utilise, pour la fabrication des lampes à décharge destinées à l'éclairage, des enveloppes en verres ayant un coefficient élevé d'absorption des rayonnements ultraviolets, on a constaté que les tubes fluorescents usuels ont une émission non négligeable de rayonnement ultraviolet "dur", de sorte qu'une exposition de longue durée à la lumière émise par ces tubes n'est pas sans risque pour la santé.

D'autre part, l'emploi de mercure, même en petites quantités (correspondant, par exemple, à une pression partielle de l'ordre de 0,007 mm Hg, à 20°C) dans l'atmosphère de gaz inerte des lampes à décharge entraîne un risque de pollution important, aussi bien lors de la fabrication des lampes que lors de l'élimination des lampes usagées, en dépit des mesures de protection habituellement prises.

L'invention vise à supprimer les risques susmentionnés.

A cet effet, la lampe selon l'invention est caractérisée par le fait que ladite matière luminescente est au moins partiellement constituée d'un composé luminescent de formule

$$Ba_{7-x-y} M_x Eu_y F_{12} X_u Y_v$$

dans laquelle

M représente au moins un métal bivalent choisi parmi le calcium, le magnésium, le stroncium et le zinc,

x est un nombre compris entre 0 et 2,

y est un nombre compris entre 0,00001 et 2,

X et Y représentent chacun un élément, identique ou différent, choisi parmi le chlore et le brome, et

u et v sont des nombres compris entre 0 et 2, dont la somme est égale à 2.

Avantageusement, la matière luminescente peut contenir, outre ledit composé luminescent, des substances auxiliaires, notamment un ou plusieurs halogénures de métal alcalin ou alcalino-terreux et/ou au moins un sel mixte de tels halogénures, permettant de modifier ses propriétés physiques telles que ses caractéristiques rhéologiques et son adhésivité à l'égard du substrat sur lequel elle doit être appliquée.

Une telle matière luminescente présente des valeurs élevées d'intensité d'émission lumineuse, dans la partie visible du spectre, pour des longueurs d'onde d'excitation correspondant au domaine des rayonnements ultraviolets dits "mous", c'est-à-dire supérieures à 300 nanomètres, alors que les matières luminescentes actuellement utilisées dans les tubes fluorescents ont une intensité d'émission très faible pour de telles longueurs d'onde de rayonnement d'excitation.

Ceci permet, en particulier, d'utiliser, comme rayonnement d'excitation, un rayonnement ayant une longueur d'onde de 337 nm engendré par une décharge électrique dans une atmosphère d'azote moléculaire ($N_2$) [contenant éventuellement une petite quantité de gaz rare tel que le néon] sous une pression de l'ordre de 0,2 à 20 mm Hg. Les deux risques mentionnés plus haut sont ainsi éliminés puisque la lampe à décharge est entièrement exempte de mercure et qu'elle utilise un rayonnement d'excitation beaucoup moins actinique que celui des tubes fluorescents conformes à l'état antérieur de la technique.

L'invention concerne également une matière luminescente convenant pour l'utilisation dans une lampe à décharge telle que mentionné plus haut. Plus précisément cette matière luminescente, capable d'émettre de la lumière visible sous l'effet d'une irradiation par un rayonnement d'excitation ultraviolet, est caractérisée par le fait qu'elle est au moins partiellement constituée d'un composé luminescent de formule

$$Ba_{7-x-y} M_x Eu_y F_{12} X_u Y_v$$

dans laquelle

M représente au moins un métal bivalent choisi parmi le calcium, le magnésium, le strontium et le zinc,

x est un nombre compris entre 0 et 2,

y est un nombre compris entre 0,00001 et 2,

X et Y représentent chacun un élément, identique ou différent, choisi parmi le chlore et le brome, et

u et v sont des nombres compris entre 0 et 2, dont la somme est égale à 2.

L'invention concerne, en outre, le composé luminescent, tel que défini ci-dessus.

Avantageusement, ledit composé luminescent contient, outre l'europium, de l'oxygène sous forme d'atomes ionisés insérés, respectivement, dans des sites cationiques et/ou interstitiels et dans des sites anioniques et/ou interstitiels de son réseau cristallin en quantité appropriée pour activer ses propriétés d'émission lumineuse.

Conformément à une forme d'exécution particulièrement avantageuse, le composé luminescent correspond à la formule

$$Ba_{7-x-y} M_x Eu_y F_{12} Cl_2$$

dans laquelle M, x et y ont la signification indiquée plus haut.

On va maintenant décrire en détail, à titre d'exemple non limitatif, une forme particulière d'exécution de la lampe à décharge selon l'invention, en se référant au dessin annexé dans lequel :

La Figure 1 est une vue schématique, en perspective, partiellement éclatée, avec une partie représentée en coupe, de la lampe à décharge selon l'invention;

Les Figures 2a et 2b sont des diagrammes comparatifs montrant les courbes caractéristiques d'émission lumineuse d'une première forme cristalline du composé minéral contenu dans la matière luminescente selon l'invention et d'une matière luminescente selon l'art antérieur pour diverses longueurs d'ondes de rayonnement d'excitation;

Les Figures 3a et 3b sont des diagrammes comparatifs montrant les courbes caractéristiques d'émission lumineuse d'une deuxième forme cristalline dudit composé minéral pour les mêmes longueurs d'ondes de rayonnement d'excitation que dans le cas de la Fig. 2;

La Figure 4 est un diagramme montrant l'influence de la teneur en europium sur l'intensité de luminescence, dans le cas de la première forme cristalline du composé minéral constituant l'élément essentiel de la matière luminescente selon l'invention, et la Figure 5 est un diagramme montrant l'influence de la substitution partielle du baryum par le calcium ou le magnésium, sur l'intensité et la distribution spectrale de la luminescence, toujours dans le cas de la première forme cristalline dudit composé minéral.

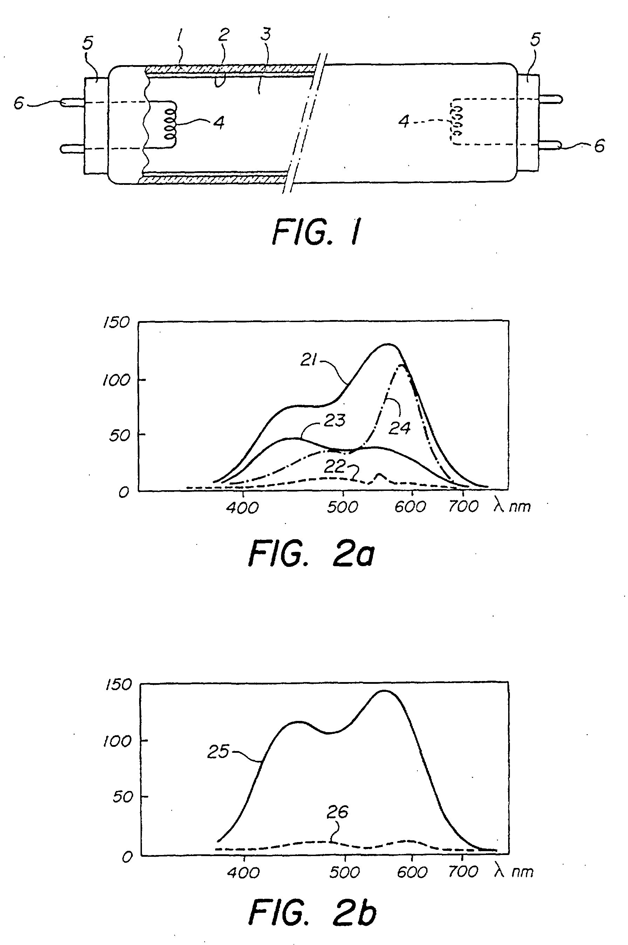

La lampe à décharge représentée à la Fig. 1 comprend une enveloppe tubulaire 1 en une matière transparente à la lumière visible mais essentiellement opaque aux rayonnements ultraviolets de longueur d'onde inférieure à environ 400 nm. Par exemple l'enveloppe 1 peut être en verre. Chacune des deux extrémités de l'enveloppe 1 est hermétiquement fermée, de manière usuelle, par un culot métallique 5, assemblé, par exemple par soudage, frittage ou collage sur l'enveloppe. L'espace intérieur 3 de l'enveloppe 1 renferme une atmosphère d'azote (contenant éventuellement une fraction de gaz rare tel que le néon) sous une pression comprise entre 0,01 et 20 mm Hg, sans aucun métal auxiliaire, en particulier, sans aucune trace de mercure. Des électrodes sous la forme de filaments 4, par exemple constitués d'un fil mince de tungstène ou de tantale recouvert d'un revêtement protecteur en un mélange d'oxyde de baryum BaO et d'oxyde de thorium $ThO_2$, sont disposées à chacune des extrémités de l'espace intérieur de l'enveloppe et raccordées, de manière connue en soi, par des bornes 6 à un circuit d'alimentation électrique (non représenté), permettant d'appliquer entre ces électrodes une différence de potentiel apte à provoquer une série de décharges électriques dans l'atmosphère d'azote avec émission d'un rayonnement ultraviolet caractéristique. Comme on le sait ce rayonnement comprend deux pics d'intensité pour des longueurs d'onde de 337 nm et 428 nm, respectivement.

Les diagrammes des Fig. 2a et Fig. 2b permettent de comparer les caractéristiques d'émission lumineuse par luminescence du composé de formule $Ba_{6,998}Eu_{0,002}F_{12}Cl_2$, sous une première forme cristalline hexagonale de structure correspondant au groupe spatial $P6_3/m$ (désignée par le terme de "forme cristalline désordonnée" dans la suite de la présente description), contenant 0,2 mole % d'europium, sous forme d'ions intégrés, en remplacement d'ions baryum, dans l'un ou l'autre des deux sites cationiques du réseau cristallin dudit composé, avec celles d'une matière luminescente conforme à l'art antérieur (désignée par le terme de "luminophore PH", dans la suite de la présente description), et essentiellement constituée d'un oxyde mixte de formule $Ca_5(PO_4)_3F:Sb:Mn$.

Les courbes 21 et 23 (Fig. 2a) indiquent la variation de l'intensité d'émission lumineuse (exprimée en unités arbitraires), en fonction de la longueur d'onde (en nm) du rayonnement émis, du composé $Ba_{6,998}Eu_{0,002}F_{12}Cl_2$, sous la forme cristalline désordonnée, activé à l'europium, pour un rayonnement d'excitation ayant, respectivement, une longueur d'onde de 356 nm (rayonnement ultraviolet "mou") et une longueur d'onde de 254 nm (rayonnement ultraviolet "dur").

Les courbes 22 et 24 (Fig. 2a) sont les courbes d'émission respectives du "luminophore PH" pour des rayonnements d'excitation correspondant, respectivement, aux mêmes longueurs d'onde que dans le cas des courbes 21 et 23. On voit que pour un rayonnement d'excitation ultraviolet "mou", le composé $Ba_{6,998}Eu_{0,002}F_{12}Cl_2$, présente des intensités élevées de luminescence, pour une large gamme de fréquence d'émission dans la partie visible du spectre (correspondant à une couleur de luminescence "blanche"), alors que les intensités de luminescence du "luminophore PH" restent faibles sur cette gamme de fréquence, en dépit d'un petit pic.

Pour un rayonnement d'excitation ultraviolet "dur", le composé $Ba_{6,998}Eu_{0,002}F_{12}Cl_2$, présente une intensité maximale d'émission inférieure à celle du "luminophore PH", mais avec une répartition plus large des intensités d'émission dans la gamme des fréquences d'émission, c'est-à-dire une couleur de luminescence plus blanche que celle du "luminophore PH".

Les courbes 25 et 26 (Fig. 2b) sont les courbes d'émission respectives du composé $Ba_{6,998}Eu_{0,002}F_{12}Cl_2$ et du "luminophore PH" pour un rayonnement d'excitation ayant une longueur d'onde de 337 nm (ultraviolet "mou"). On voit que, pour une telle longueur d'onde, l'intensité de luminescence du composé $Ba_{6,998}Eu_{0,002}F_{12}Cl_2$ est nettement supérieure (de l'ordre de 10 à 15 fois) à celle du "luminophore PH", avec une large répartition de l'intensité d'émission en fonction de la fréquence.

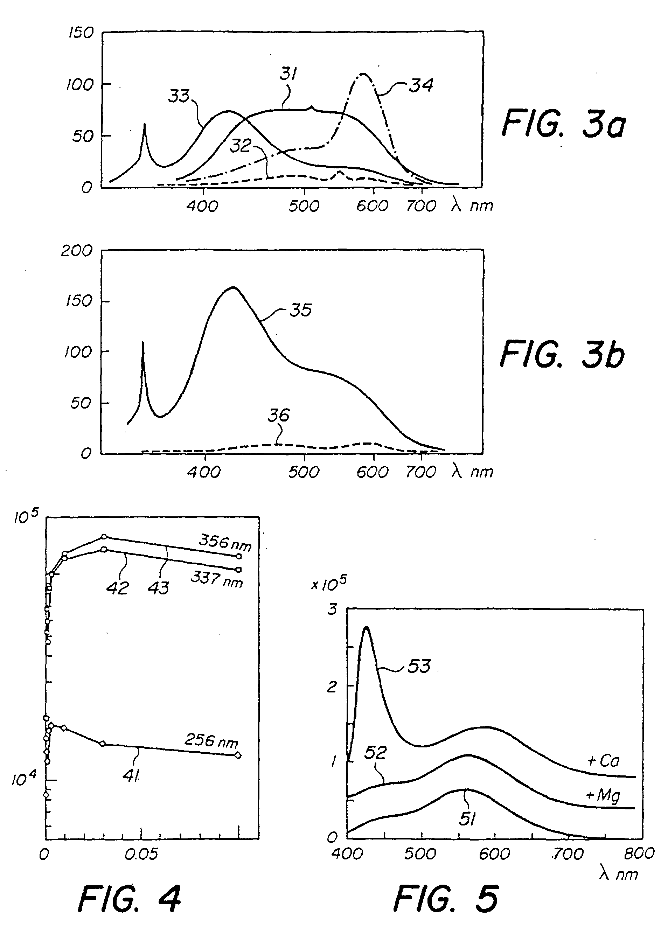

Les diagrammes des Figs. 3a et 3b correspondent à ceux des Figs. 2a et 2b et concernent le composé de formule $Ba_{6,998}Eu_{0,002}F_{12}Cl_2$ (avec adjonction de chlorure de lithium LiCl) sous une deuxième forme cristalline hexagonale, de structure correspondant au groupe spatial P6 (désignée par le terme de "forme cristalline ordonnée" dans la suite de la présente description), contenant 0,2 moles % d'europium, sous forme d'ions intégrés, en remplacement d'ions baryum, dans un site cationique au réseau cristallin.

Ces diagrammes montrent que les caractéristiques de luminescence de la forme cristalline ordonnée de composé $Ba_7F_{12}Cl_2$ sont analogues à celles de la forme cristalline désordonnée, tout en illustrant le fait que l'adjonction du chlorure de lithium permet de modifier ces caractéristiques. Plus précisément, cette modification est mise en évidence par la présence d'un pic d'intensité dans le proche ultraviolet, pour les longueurs d'ondes de rayonnement d'excitation ayant les valeurs 254 nm (courbe 33) et 337 nm (courbe 35).

Le diagramme de la Fig. 4 montre la variation de l'intensité de luminescence (exprimée en unité arbitraire) du composé de formule $Ba_{7-y}Eu_yF_{12}Cl_2$, sous forme cristalline désordonnée, activé par insertion d'ions europium, en fonction de la teneur en europium, indiquée par le rapport du nombre d'atomes europium, au nombre total d'atomes de baryum et d'europium, pour la valeur de référence de longueur d'onde de luminescence 580 nm à une température de 300°K, et des longueurs d'ondes de rayonnement d'excitation respectivement égales à 256 nm (courbe 41), 337 nm (courbe 42) et 356 nm (courbe 43).

Ce diagramme fait apparaître une augmentation rapide de l'effet d'activation de la luminescence en fonction de la teneur en europium, pour les valeurs de cette teneur inférieures à 0,3%, environ, dans la cas des courbes 42 et 43, et 0,2% pour la courbe 41, avec saturation de cet effet d'activation correspondant à une décroissance lente pour les teneurs en europium supérieures à environ 1%, pour la courbe 41, et 4% pour les courbes 42 et 43.

Le diagramme de la Fig. 5 montre les courbes de luminescence (variation de l'intensité d'émission, exprimée en unité arbitraire, en fonction de la longueur d'onde du rayonnement de luminescence) respectives, pour une longueur d'onde d'excitation de 356 nm, à une température de 300°K, dans le cas du composé de formule $Ba_{6,999}Eu_{0,001}F_{12}Cl_2$, forme cristalline désordonnée (courbe 51), ainsi que du composé correspondant de formule $Ba_{6,469}Eu_{0,001}Ca_{0,53}F_{12}Cl_2$ (c'est-à-dire le composé de formule $Ba_{6,999-x}Eu_{0,001}Ca_xF_{12}Cl_2$ où x = 0,53) (courbe 53) et $Ba_{6,759}Eu_{0,001}Mg_{0,24}F_{12}Cl_2$ (c'est-à-dire le composé de formule $Ba_{6,999-x}Eu_{0,001}Mg_xF_{12}Cl_2$ où x = 0,24) (courbe 52). Il est à remarquer que, pour rendre le diagramme plus clair, les courbes 52 et 53 ont été décalées verticalement par rapport à la courbe 51, avec des écarts correspondant respectivement à $0,4{\times}10^5$ unités et $0,8{\times}10^5$ unités.

On voit que la substitution d'une partie du baryum par le magnésium permet d'augmenter uniformément l'intensité de luminescence pour toutes les fréquences d'émission du composé de base alors que la substitution partielle du baryum par le calcium se traduit par une augmentation non uniforme de cette intensité avec, notamment, un important pic d'intensité dans la partie bleue-violette du spectre lumineux.

Pour la préparation du composé minéral de formule $Ba_{6,998-x}Eu_{0,002}M_xF_{12}Cl_2$, on peut procéder de toute manière appropriée, et notamment avoir recours aux méthodes générales usuelles pour l'obtention de composés du même genre.

A titre d'exemple, non limitatif, de procédés particulièrement avantageux, on peut notamment mentionner le procédé, connu en soi, habituellement désigné par le terme de "méthode de flux" ou "méthode au fondant".

On peut, ainsi, obtenir le composé de formule $Ba_{6,998}Eu_{0,002}F_{12}Cl_2$, sous la forme cristalline désordonnée, par fusion d'un mélange de 70 à 90%, en moles, de fluorure de baryum $BaF_2$ et 10 à 30%, en moles, de chlorure de sodium $Na_2Cl_2$, à une température supérieure à 770°C, suivie du refroidissement lent de la masse fondue, jusqu'à la température ambiante. Au cours de ce refroidissement, le composé $Ba_{6,998}Eu_{0,002}F_{12}Cl_2$ cristallise en aiguilles que l'on sépare de la masse de fondant (chlorure de sodium) par lavage à l'eau chaude.

En variante, on peut remplacer, jusqu'à environ 25%, en moles, du chlorure de sodium par un autre sel fondant tel que le chlorure de potassium KCl, le bromure de sodium NaBr, le fluorure de sodium NaF, le chlorure de lithium LiCl ou le fluorure de lithium LiF, sans modification du résultat.

En revanche, le remplacement partiel du fluorure de baryum (jusqu'à une fraction molaire égale à 2/7) par au moins un fluorure de métal bivalent (choisi parmi le fluorure de calcium $CaF_2$, le fluorure de magnésium $MgF_2$, le fluorure de strontium $SrF_2$ et le fluorure de zinc $ZnF_2$) permet d'obtenir des cristaux mixtes du composé minéral $Ba_{6,998-x}Eu_{0,002}M_xF_{12}Cl_2$ dans lesquels M représente au moins un métal bivalent choisi parmi le calcium, le magnésium, le strontium et le zinc.

De manière analogue, on peut également obtenir le composé de formule $Ba_{6,998}Eu_{0,002}F_{12}Cl_2$ à partir d'un mélange de chlorure de baryum $BaCl_2$, ou de fluorochlorure de baryum BaFCl, et de fluorure de sodium NaF, jouant le rôle de fondant.

Il est également possible d'obtenir le composé $Ba_7F_{12}Cl_2$ par réaction à l'état solide, à 700°C, du fluorure de baryum $BaF_2$ avec le chlorure de sodium.

On peut obtenir le composé de formule $Ba_{6,998}Eu_{0,002}F_{12}Cl_2$, sous la forme cristalline ordonnée, par fusion d'un mélange de 85%, en moles, de fluorure de baryum $BaF_2$ et 15%, en moles, de chlorure de lithium LiCl, à environ 900°C, refroidissement lent de la masse fondue et séparation des cristaux aciculaires du composé $Ba_{6,998}Eu_{0,002}F_{12}Cl_2$ "ordonné" ainsi formés, du fondant par lavage à l'eau chaude, de manière similaire à la préparation, décrite plus haut, de la forme cristalline désordonnée de ce même composé.

Comme dans le cas de la préparation de la forme cristalline désordonnée, on peut remplacer, lors de la préparation de la forme cristalline ordonnée une partie du chlorure de lithium, jouant le rôle de fondant, par du chlorure de potassium KCl.

De même, on peut obtenir des cristaux mixtes, correspondant à la forme cristalline ordonnée, de composé de formule $Ba_{6,998-x}Eu_{0,002}Ca_xF_{12}Cl_2$, par remplacement partiel du fluorure de baryum par du fluorure de calcium $CaF_2$.

Pour l'obtention de composés luminescents de formule $Ba_{6,998-x}Eu_{0,002}M_xF_{12}Cl_2$ activés par insertion d'ions europium dans leur réseau cristallin, on peut procéder de manière analogue aux préparations qui viennent d'être décrites, avec adjonction dans les mélanges de sels utilisés de quantités appropriées de sels d'europium correspondant aux sels de baryum, par exemple en substituant une quantité de l'ordre de 0,3%, en moles, du fluorure de baryum $BaF_2$ par du fluorure d'europium $EuF_2$, et en effectuant la mise en fusion des ingrédients des mélanges utilisés ainsi que le refroidissement des masses fondues obtenues sous atmosphère inerte.

## Revendications

1. Lampe électrique à décharge, comprenant une enveloppe dont au moins une partie est constituée d'une paroi transparente dont la surface intérieure est au moins partiellement recouverte par un revêtement de matière luminescente capable d'émettre de la lumière visible sous l'effet d'une irradiation par un rayonnement d'excitation ultraviolet, la lampe comprenant, en outre, des moyens pour produire un tel rayonnement, **caractérisée par le fait que** ladite matière luminescente est au moins partiellement constituée d'un composé luminescent de formule

$$Ba_{7-x-y} M_x Eu_y F_{12} X_u Y_v$$

dans laquelle

M représente au moins un métal bivalent choisi parmi le calcium, le magnésium, le strontium et le zinc,

x est un nombre compris entre 0 et 2,

y est un nombre compris entre 0,00001 et 2,

X et Y représentent chacun un élément, identique ou différent, choisi parmi le chlore et le brome, et

u et v sont des nombres compris entre 0 et 2, dont la somme est égale à 2.

2. Lampe selon la revendication 1, **caractérisée par le fait que** ledit composé luminescent contient, outre l'europium, de l'oxygène sous forme d'atomes ionisés insérés, respectivement, dans des sites cationiques et/ou interstitiels et dans des sites anioniques et/ou interstitiels de son réseau cristallin en quantité appropriée pour activer ses propriétés d'émission lumineuse.

3. Lampe selon la revendication 2, **caractérisée par le fait que** ledit composé luminescent correspond à la formule

$$Ba_{7-x-y} M_x Eu_y F_{12} Cl_2$$

dans laquelle M, x et y ont la signification indiquée dans la revendication 1.

4. Lampe selon la revendication 1, **caractérisée par le fait que** lesdits moyens pour produire le rayonnement ultraviolet d'excitation de la matière luminescente comprennent une atmosphère d'azote, sous une pression comprise entre 0,01 et 40 mm Hg, contenue dans ladite enveloppe, et au moins deux électrodes reliées à un circuit électrique permettant d'appliquer entre elles une différence de potentiel apte à provoquer une série de décharges électriques dans cette atmosphère.

**5.** Matière luminescente, capable d'émettre de la lumière visible sous l'effet d'une irradiation par un rayonnement d'excitation ultraviolet, **caractérisée en ce qu'**elle est au moins partiellement constituée d'un composé luminescent de formule

$$Ba_{7-x-y} \, M_x \, Eu_y \, F_{12} \, X_u \, Y_v$$

dans laquelle

M représente au moins un métal bivalent choisi parmi le calcium, le magnésium, le strontium et le zinc,

x est un nombre compris encre 0 et 2,

y est un nombre compris entre 0,00001 et 2,

X et Y représentent chacun un élément, identique ou différent, choisi parmi le chlore et le brome, et

u et v sont des nombres compris entre 0 et 2, dont la somme est égale à 2.

**6.** Matière luminescente selon la revendication 5, **caractérisée par le fait que** ledit composé luminescent contient de l'europium et/ou de l'oxygène, sous forme d'atomes ionisés insérés, respectivement, dans des sites cationiques et/ou interstitiels et dans des sites anioniques et/ou interstitiels de son réseau cristallin en quantité appropriée pour activer ses propriétés d'émission lumineuse.

**7.** Matière luminescente selon la revendication 5 ou la revendication 6, **caractérisée par le fait qu'**elle contient, outre ledit composé luminescent, au moins un halogénure de métal alcalin ou alcalino-terreux et/ou au moins un sel mixte de tels halogénures.

**8.** Composé luminescent de formule

$$Ba_{7-x-y} \, M_x \, Eu_y \, F_{12} \, X_u \, Y_v$$

dans laquelle

M représente au moins un métal bivalent choisi parmi le calcium, le magnésium, le strontium et le zinc,

x est un nombre compris entre 0 et 2,

y est un nombre compris entre 0,00001 et 2,

X et Y représentent chacun un élément, identique ou différent, choisi parmi le chlore et le brome, et

u et v sont des nombres compris entre 0 et 2, dont la somme est égale à 2.

**9.** Composé minéral luminescent selon la revendication 8, **caractérisé par le fait qu'**il contient, outre l'europium, de l'oxygène, sous forme d'atomes ionisés insérés, respectivement, dans des sites cationiques et/ou interstitiels et dans des sites anioniques et/ou interstitiels de son réseau cristallin en quantité appropriée pour activer ses propriétés d'émission lumineuse.

**10.** Composé selon la revendication 9, **caractérisé par le fait qu'**il correspond à la formule

$$Ba_{7-x-y}M_xEu_yF_{12}Cl_2$$

dans laquelle M, x et y ont la signification indiquée dans la revendication 8.

**11.** Composé selon l'une des revendications 8 à 10, **caractérisé par le fait qu'**il est sous une forme cristalline hexagonale de structure correspondant au groupe spatial $P6_3/m$.

**12.** Composé selon l'une des revendications 8 à 10, **caractérisé par le fait qu'**il est sous une forme cristalline hexagonale de structure correspondant au groupe spatial $P\bar{6}$.

**Patentansprüche**

**1.** Elektrische Entladungslampe mit einer Umhüllung, die zumindest zu einem Teil aus einer transparenten Wand besteht, deren innere Oberfläche zumindest teilweise mit einem Überzug aus einem Leuchtstoff bedeckt ist, der unter Einwirkung einer Bestrahlung mit einer ultravioletten Anregungsstrahlung sichtbares Licht emittieren kann, wobei die Lampe außerdem Mittel zur Erzeugung dieser Strahlung umfasst, **dadurch gekennzeichnet, dass** der Leuchtstoff zumindest teilweise aus einer lumineszierenden Verbindung der Formel

$$Ba_{7-x-y} \, M_x \, Eu_y \, F_{12} \, X_u \, Y_v$$

besteht, in der

M mindestens ein aus Kalzium, Magnesium, Strontium und Zink ausgewähltes zweiwertiges Metall bedeutet,

x eine Zahl von 0 bis 2 ist,

y eine Zahl von 0,00001 bis 2 ist,

X und Y, gleich oder verschieden, je ein aus Brom und Chlor ausgewähltes Element bedeuten und

u und v Zahlen von 0 bis 2 sind, deren Summe gleich 2 ist.

2. Lampe nach Anspruch 1, **dadurch gekennzeichnet, dass** die lumineszierende Verbindung außer Europium Sauerstoff in Form von auf Kationen- und/oder Zwischengitterplätzen bzw. auf Anionen- und/oder Zwischengitterplätzen ihres Kristallgitters eingebauten ionisierten Atomen in einer Menge enthält, die geeignet ist, seine Lichtemissionsfähigkeit zu fördern.

3. Lampe nach Anspruch 2, **dadurch gekennzeichnet, dass** die lumineszierende Verbindung der Formel

$$Ba_{7-x-y} M_x Eu_y F_{12} Cl_2$$

entspricht, in der M, x und y die in Anspruch 1 angegebene Bedeutung haben.

4. Lampe nach Anspruch 1, **dadurch gekennzeichnet, dass** die Mittel zur Erzeugung der ultravioletten Anregungsstrahlung für den Leuchtstoff eine in der Umhüllung enthaltene Stickstoffatmosphäre mit einem Druck von 0,01 bis 40 mm Hg und mindestens zwei mit einem Stromkreis verbundene Elektroden umfassen, mit dem man an diese eine Potentialdifferenz anlegen kann, die geeignet ist, in der Atmosphäre eine Reihe von elektrischen Entladungen hervorzurufen.

5. Leuchtstoff, der unter Einwirkung einer Bestrahlung mit einer ultravioletten Anregungsstrahlung sichtbares Licht emittieren kann, **dadurch gekennzeichnet, dass** er zumindest teilweise aus einer lumineszierenden Verbindung der Formel

$$Ba_{7-x-y} M_x Eu_y F_{12} X_u Y_v$$

besteht, in der

M mindestens ein aus Kalzium, Magnesium, Strontium und Zink ausgewähltes zweiwertiges Metall bedeutet,
x eine Zahl von 0 bis 2 ist,
y eine Zahl von 0,00001 bis 2 ist,
X und Y, gleich oder verschieden, je ein aus Brom und Chlor ausgewähltes Element bedeuten und
u und v Zahlen von 0 bis 2 sind, deren Summe gleich 2 ist.

6. Leuchtstoff nach Anspruch 5, **dadurch gekenn-**

zeichnet, dass die lumineszierende Verbindung außer Europium Sauerstoff in Form von auf Kationen- und/oder Zwischengitterplätzen bzw. auf Anionen- und/oder Zwischengitterplätzen ihres Kristallgitters eingebauten ionisierten Atomen in einer Menge enthält, die geeignet ist, seine Lichtemissionsfähigkeit zu fördern.

7. Leuchtstoff nach Anspruch 5 oder 6, **dadurch gekennzeichnet, dass** er außer der lumineszierenden Verbindung mindestens en Alkali- oder Erdalkalihalogenid und/oder mindestens ein Mischsalz dieser Halogenide enthält.

8. Lumineszierende Verbindung der Formel

$$Ba_{7-x-y} M_x Eu_y F_{12} X_u Y_v,$$

in der

M mindestens ein aus Kalzium, Magnesium, Strontium und Zink ausgewähltes zweiwertiges Metall bedeutet,
x eine Zahl von 0 bis 2 ist,
y eine Zahl von 0,00001 bis 2 ist,
X und Y, gleich oder verschieden, je ein aus Brom und Chlor ausgewähltes Element bedeuten und
u und v Zahlen von 0 bis 2 sind, deren Summe gleich 2 ist.

9. Mineralische lumineszierende Verbindung nach Anspruch 8, **dadurch gekennzeichnet, dass** sie außer Europium Sauerstoff in Form von auf Kationen- und/oder Zwischengitterplätzen bzw. auf Anionen- und/oder Zwischengitterplätzen ihres Kristallgitters eingebauten ionisierten Atomen in einer Menge enthält, die geeignet ist, seine Lichtemissionsfähigkeit zu fördern.

10. Verbindung nach Anspruch 9, **dadurch gekennzeichnet, dass** die lumineszierende Verbindung der Formel

$$Ba_{7-x-y} M_x Eu_y F_{12} Cl_2$$

entspricht, in der M, x und y die in Anspruch 8 angegebene Bedeutung haben.

11. Verbindung nach einem der Ansprüche 8 bis 10, **dadurch gekennzeichnet, dass** sie in einer hexagonalen Kristallform mit einer Struktur der Raumgruppe $P6_3/m$ vorliegt.

12. Verbindung nach einem der Ansprüche 8 bis 10, **dadurch gekennzeichnet, dass** sie in einer hexagonalen Kristallform mit einer Struktur der Raumgruppe $P\bar{6}$ vorliegt.

## Claims

1. Electric discharge lamp, comprising an envelope at least part of which consists of a transparent wall whose inner surface is at least partly covered with a coating of luminescent material capable of emitting visible light due to the effect of being irradiated by ultraviolet excitation radiation, the lamp furthermore comprising means for producing such radiation, **characterized in that** the said luminescent material consists at least partly of a luminescent compound of formula:

$$Ba_{7-x-y}M_xEu_yF_{12}X_uY_v$$

in which

| M | represents at least one divalent metal chosen from calcium, magnesium, strontium and zinc; |
|---|---|
| x | is a number between 0 and 2; |
| y | is a number between 0.00001 and 2; |
| X and Y | each represent an element, which is identical or different, chosen from chlorine and bromine; and |
| u and v | are numbers between 0 and 2, the sum of which is equal to 2. |

2. Lamp according to Claim 1, **characterized in that** the said luminescent compound contains, in addition to europium, oxygen in the form of ionized atoms inserted into cationic and/or interstitial sites and into anionic and/or interstitial sites in its crystal lattice respectively, in an amount suitable for activating its light-emitting properties.

3. Lamp according to Claim 2, **characterized in that** the said luminescent compound corresponds to the formula:

$$Ba_{7-x-y}M_xEu_yF_{12}Cl_2$$

in which M, x and y have the meanings indicated in Claim 1.

4. Lamp according to Claim 1, **characterized in that** the said means for producing the ultraviolet radiation for exciting the luminescent material comprise a nitrogen atmosphere, under a pressure of between 0.01 and 40 mmHg, contained in the said envelope, and at least two electrodes connected to an electrical circuit making it possible for a potential difference to apply between them which is capable of causing a series of electrical discharges in this atmosphere.

5. Luminescent material capable of emitting visible light due to the effect of being irradiated by ultraviolet excitation radiation, **characterized in that** it consists at least partly of a luminescent compound of formula:

$$Ba_{7-x-y}M_xEu_yF_{12}X_uY_v$$

in which

| M | represents at least one divalent metal chosen from calcium, magnesium, strontium and zinc; |
|---|---|
| x | is a number between 0 and 2; |
| y | is a number between 0.00001 and 2; |
| X and Y | each represent an element, which is identical or different, chosen from chlorine and bromine; and |
| u and v | are numbers between 0 and 2, the sum of which is equal to 2. |

6. Luminescent material according to Claim 5, **characterized in that** the said luminescent compound contains europium and/or oxygen, in the form of ionized atoms inserted into cationic and/or interstitial sites and into anionic and/or interstitial sites in its crystal lattice respectively, in an amount suitable for activating its light-emitting properties.

7. Luminescent material according to Claim 5 or Claim 6, **characterized in that** it contains, in addition to the said luminescent compound, at least one alkali or alkaline-earth metal halide and/or at least one mixed salt of such halides.

8. Luminescent compound of formula:

$$Ba_{7-x-y}M_xEu_yF_{12}X_uY_v$$

in which

| M | represents at least one divalent metal chosen from calcium, magnesium, strontium and zinc; |
|---|---|
| x | is a number between 0 and 2; |
| y | is a number between 0.00001 and 2; |
| X and Y | each represent an element, which is identical or different, chosen from chlorine and bromine; and |
| u and v | are numbers between 0 and 2, the sum of which is equal to 2. |

9. Luminescent mineral compound according to Claim 8, **characterized in that** it contains, in addition to europium, oxygen in the form of ionized atoms inserted into cationic and/or interstitial sites and into anionic and/or interstitial sites in its crystal lattice respectively, in an amount suitable for activating its light-emitting properties.

10. Compound according to Claim 9, **characterized in that** it corresponds to the formula:

$$Ba_{7-x-y}M_xEu_yF_{12}Cl_2$$

in which M, x and y have the meanings indicated in Claim 8.

11. Compound according to one of Claims 8 to 10, **characterized in that** it has a hexagonal crystal habit of structure corresponding to the $P6_3/m$ space group.

12. Compound according to one of Claims 8 to 10, **characterized in that** it has a hexagonal crystal habit of structure corresponding to the $P\bar{6}$ space group.

FIG. 1

FIG. 2a

FIG. 2b

FIG. 3a

FIG. 3b

FIG. 4

FIG. 5